# EUROPEAN PATENT SPECIFICATION

(11) **EP 3 903 124 B1**
(45) Date of publication and mention of the grant of the patent: **04.11.2026**
(21) Application number: 19906212.6
(22) Date of filing: 20.12.2019
(51) Int. Cl.: G01S 15/10, G01S 15/931, G01S 15/58, G01S 7/53

(54) **ULTRASONIC ECHO PROCESSING IN PRESENCE OF DOPPLER SHIFT**
ULTRASCHALLECHOVERARBEITUNG IN ANWESENHEIT VON DOPPLERVERSCHIEBUNG
TRAITEMENT D'ÉCHO ULTRASONORE EN PRÉSENCE D'UN DÉCALAGE DOPPLER

(30) Priority: 26.12.2018 US 201816232308
(43) Date of publication of application: 03.11.2021
(73) Proprietor: Texas Instruments Incorporated, Dallas, TX 75265 (US)
(72) Inventor: DING, Lei, Plano, TX 75093 (US); RAMASWAMY, Srinath, Murphy, TX 75094 (US); DABAK, Anand, Plano, TX 75025 (US)
(74) Representative: Zeller, Andreas
(86) International application number: PCT/US2019/068037
(87) International publication number: WO 2020/139778

(56) References cited:
- EP-B1- 2 737 857
- WO-A1-2015/039805
- WO-A1-2019/217306
- DE-A1- 102013 021 845
- US-A1- 2005 075 568
- US-A1- 2012 272 738
- US-A1- 2014 219 062

## Description

### BACKGROUND

Ultrasonic ranging is used in a variety of applications. For example, in an automotive application, ultrasonic transducers are arranged in the bumper of an automobile. The transducers emit ultrasonic signals. The emitted ultrasonic signals reflect off nearby objects, if such objects are indeed present, and the reflected signals are sensed by the transducers. The round-trip time of the ultrasound signals is measured so that distance to the object can be determined. DE 10 2013 021 845 A1 relates to a method for detecting target echoes in a received signal of an ultrasonic sensor of a motor vehicle by providing a reference signal for decoding the received signal.

### SUMMARY

The invention is defined by the features of the appended claims.

### BRIEF DESCRIPTION OF THE DRAWINGS

FIG. 1 illustrates an automobile with ultrasonic sensors to measure distance to an object in accordance with the described examples.
FIG. 2 is a block diagram of ultrasonic transducers and corresponding circuitry in accordance with the described examples.
FIG. 3 shows a portion of the circuitry usable with ultrasonic transducers in accordance with described examples.
FIGS. 4 and 5 illustrate envelope waveforms from two different correlators using two different templates.
FIG. 6 shows an example of the relationship between the ratio of peaks of correlator waveforms and Doppler shift
FIG. 7 illustrates an example of a correlator.
FIG. 8 shows an envelope detector in accordance with an example.
FIG. 9 shows an example of a decimator.

### DETAILED DESCRIPTION OF EXAMPLE EMBODIMENTS

As described above, reflected ultrasonic signals are detected by an ultrasonic transducer and used to measure round-trip time to thereby determine distance to the object which reflected the ultrasonic signals. For a zero relative velocity between the ultrasonic transducer and object to reflect the ultrasonic signals (e.g., the automobile is stationary with respect to an object), the round-trip time can be readily and accurately determined. However, for a non-zero relative velocity between the ultrasonic transducer and the object, Doppler shift is created in the received ultrasonic signal. Accordingly, the frequency of the received ultrasonic signals will be different than the frequency of those transmitted by the transducer in the first place. As the distance between the transducer and the object increases over time, the frequency of the received ultrasonic signal is lower than that of the transmitted signal, and vice versa. The relative velocity between transducer and object can be due to the automobile moving away from or towards a stationary object, the object may be moving and the automobile may be stationary, or both automobile and object may be in motion.

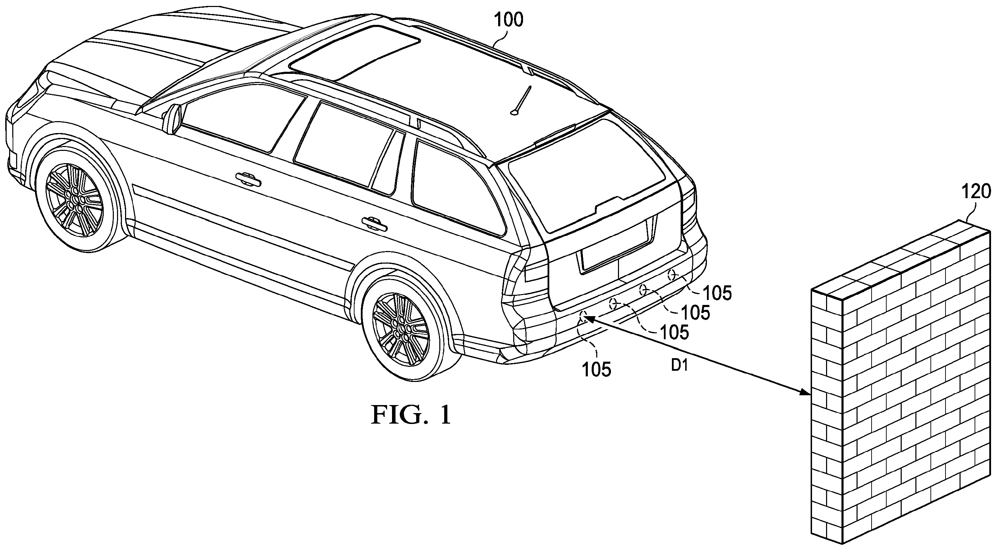

As described above, one application for an ultrasonic ranging system is for an automobile, although other applications for the use of distance measuring systems based on ultrasound are possible as well. FIG. 1 illustrates an automobile 100. The automobile includes one or more ultrasonic transducers in either or both of the front and rear bumpers. In the example of FIG. 1, four ultrasonic transducers 105 are shown. The number of transducers in each bumper can be other than four in other examples. The ultrasonic transducers are referred to herein also as transducers for simplicity. In some examples, ultrasonic transducers are used as transducers 105, but in other cases transducers other than ultrasonic transducers can be used. Each ultrasonic transducer emits a sound wave at a specific frequency and then detects a reflection of the sound waves after they have bounced off an object (e.g., object 120) and returned to the transducer. It is known that sound travels through air at about 344 meters/second (1129 feet/second). The elapsed time between when the sound is first emitted from the transducer and when the reflected sound wave is detected back at the transducer can be measured by circuitry coupled to the transducer. The total round-trip distance is the product of speed of sound and the measured time. The distance between the transducer and an object (e.g., D1 in FIG. 1) is then given by: $distance = \frac{speed of sound \times time}{2}$ Although any of a wide range of frequencies can be used for the sound waves (also referred to herein as "sound signals") generated by the transducers 105, in some examples, the sound waves have a frequency(ies) that is above the frequencies which humans can typically hear. For example, the sound waves may have frequencies above 20,000 Hz, although frequencies below 20,000 Hz are possible as well. In one example, the frequency is 50 kHz and the emitted sound waves comprise a number of pulses (e.g., 15-20 pulses) of the 50 kHz signal.

In some implementations, the transducers 105 emit the same frequency (e.g., 50 kHz) but do so in sequential fashion, that is, one transducer 105 emits a sound signal and waits for a predetermined period of time for a reflection before the next transducer 105 is permitted to emit its sound signal. In other implementations, a different signal signature is implemented by each transducer 105. For example, 50 kHz can be modulated in a unique way (e.g., using frequency modulation) for use by each transducer. In one example, the frequencies used to generate a given sound burst (also called a "chirp") may range between a first frequency and second frequency and thus have a difference referred to as Δf. Accordingly, all of the transducers 105 can emit their sound signals simultaneously. As each emitted sound signal is uniquely coded for a specific transducer 105, the reflected sound signals are unique as well and are readily differentiated by the circuitry connected to each transducer.

The described examples are directed to an ultrasonic sensing system that can determine the Doppler shift for an object that is moving relative to the ultrasonic transducer. The system determines the round-trip time of the sound waves between the transducer and the object, determines the Doppler shift and corrects the measured time for the Doppler shift. The measured Doppler shift also or alternatively can be used to generate a message, alert, announcement, etc. that an object is drawing nearer the sensor or is moving away from the sensor.

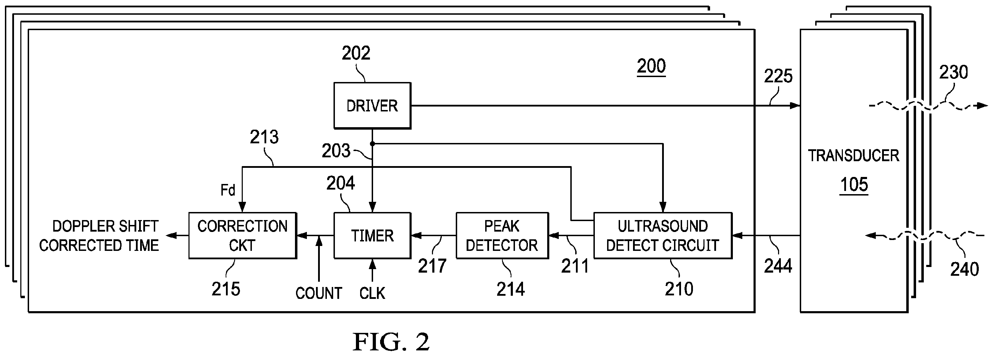

FIG. 2 illustrates multiple transducers 105, with each transducer 105 coupled to a corresponding ultrasonic sensing circuit 200 that operates the respective transducer. The ultrasonic sensing circuit 200 includes a driver 202. The driver 202 generates an electrical signal 225 which is then converted to a sound signal 230 by the transducer 105. The driver 202 also asserts a control signal 203 to a timer 204 to initiate the timer 204 to measure time. In one example, the timer 204, when initiated by control signal 203, counts pulses of a periodic clock signal (CLK). Each transducer 105 also can receive a sound signal 240 (e.g., a sound signal reflected by object 120) and convert the received sound signal 240 to an electrical signal 244. An ultrasound detect circuit 210 receives and processes the electrical signal 244 (which is indicative of the reflected sound signal 240). The ultrasound detect circuit 210 processes electrical signal 244 to determine when a reflected sound signal has been received by the transducer 105. In response to determining that a reflected sound signal has been received by the transducer, the ultrasound detect circuit 210 generates an output signal 211 to a peak detector 214. A signal indicative of the peak detected in signal 211 is then used as a control signal 217 to the timer 204 to cause the timer to cease measuring time (e.g., cease counting pulses of the periodic clock signal). The count value (COUNT) of the timer 204 thus is indicative of the time that elapsed between when the sound signal 230 was emitted by the transducer 105 and when a reflected sound signal 240 was received by the transducer. The count value of the timer 204 thus is indicative of distance to the object.

The ultrasound detect circuit 210 also determines a Doppler frequency (Fd) associated with the reflected sound signal. The ultrasound detect circuit 210 generates a signal 213 indicative of the Doppler frequency. Signal 213 may encode or otherwise be indicative of Fd. In this example, the ultrasonic sensing circuit 200 also includes a correction circuit 215 which corrects the time measurement (COUNT) from the timer 204 based on the Doppler frequency Fd determined by the ultrasound detect circuit. The Doppler shift corrected time value from the correction circuit 215 can be used to, for example, determine distance D1 to the object in the face of Doppler shift caused by a non-zero relative velocity between transducer 105 and object 120, to indicate whether the distance to an object is becoming smaller or larger, etc.

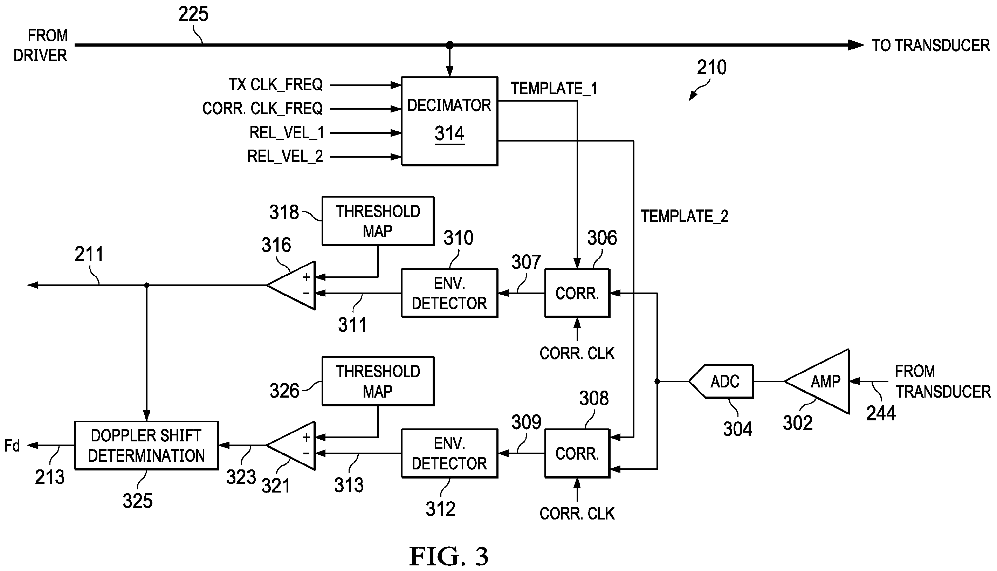

FIG. 3 shows an example implementation of the ultrasound detect circuit 210. In this example, the ultrasound detection circuit 210 includes an amplifier 302, an analog-to-digital converter (ADC) 304, correlators 306 and 308, envelope detectors 310 and 312, a decimator 314, comparator 316 and 321, threshold maps 318 and 326, and a Doppler shift determination circuit 325. The amplifier 302 amplifies the incoming signal 244 from the transducer 105 and provides the amplified signal to the ADC 304 which then converts the analog amplified signal to a digital representation. The digital representation from the ADC 304, which comprises a signal derived from the transducer 105, is then correlated by the correlator 306 with a template signal TEMPLATE_1 generated by the decimator 314 to produce a correlator output signal 307. Similarly, the correlator 308 correlates the digital representation from the ADC 304 with a template signal TEMPLATE_2 also generated by the decimator 314 to produce a correlator output signal 309. Through use of, for example, the envelope detectors 310 and 312, the Doppler shift determination circuit 325 determines a Doppler frequency shift based on the output signals 307 and 309 from the correlators 306 and 308.

Envelope detector 310 generates an output signal 311 that corresponds to an envelope of the output signal 307 from correlator 306. Envelope detector 312 generates an output signal 313 that corresponds to an envelope of the output signal 309 from correlator 306. In this example, the output signal 311 from envelope detector 310 is compared to a threshold map 318 by comparator 316 to produce a comparator output signal 317 and the output signal 313 from envelope detector 312 is compared to a threshold map 326 (which may be the same as threshold map 318) by comparator 321 to produce a comparator output signal 323. The threshold maps 318 and 326 define time-varying thresholds that indicate valid objects when the signal envelope is above the threshold. In some examples, threshold map 326 is the same as threshold map 318. The threshold is set to be above the expected noise or false echoes at a given distance. For example, the threshold map 318 can be defined to avoid false detection of objects. If the output signal 311 from envelope detector 310 exceeds the signal from the threshold map, then the comparator output signal 211 is asserted as an indication that an object has been detected at that moment in time. As described above, an assertion of signal 211 is used to stop timer 204 in FIG. 2 to thereby generate an estimate of the round-trip time of the ultrasonic signal. An estimate of the distance D1 can then be made based on the count output from timer 204 as described above.

The Doppler shift determination circuit 325 determines a Doppler frequency Fd based on the output signals 307 and 309 from the correlators 306 and 308. In one example, the Doppler shift determination circuit 325 determines the Fd based on the ratio of the output signal 311 from envelope detector 310 to the output signal 313 from envelope detector 312. The ratio can be computed as the peak of the signal 311 divided by the peak of the signal 313 (or vice versa). The correction circuit 215 (FIG. 2) uses the Doppler frequency Fd to correct the measured time value.

For a transmitted sound signal *x(t)*, the received echo is *y*(*t*) *= x*(*t - t_{d}*). For a static object 120 (i.e., the object is not moving relative to the transducer 105), ${t}_{d} = \frac{2 ∗ R 0}{c}$, where *R0* is the distance and c is the speed of sound (e.g., 344 meters/second). For a moving object with a constant velocity v relative to the transducer 105, ${t}_{d} = \frac{2 ∗ R 0 + 2 vt}{c}$, where *R0* is the distance at time t = 0. The main concern is with the effect of the Doppler shift on the echo and thus for analysis purposes, R0 can be set equal to 0. Therefore, the received signal with a Doppler shift can be represented as: $y \left(t\right) = x \left(t-\frac{2 vt}{c}\right)$ $y \left(t\right) = x \left[\left(1-\frac{2 v}{c}\right)\right] t$ The transmit clock frequency from the driver (i.e., the frequency of the driver's signal to the transducer) is a higher frequency than the clock frequency of the correlator (CORR CLK in FIG. 3). The decimator 314 decimates the electrical signal 225 from the driver 202 to produce TEMPLATE_1 and TEMPLATE_2. These 2 templates are generated using different decimation ratios and the decimation ratio used to generate each template is based on an assumed relative velocity between an object and the transducer 105. Inputs to the decimator include the transmit clock frequency (TX CLK FREQ), the correlator clock frequency (CORR CLK FREQ), and a relative velocity value to be used for each of the templates (REL_VEL_1 an REL_VEL_2 in the example of FIG. 3). These values may be programmed into the ultrasonic sensing system 200. In one example, any or all of TX CLK FREQ, CORR CLK FREQ, REL_VEL_1 and REL_VEL_2 are programmed into one or more registers within the ultrasonic sensing system 200.

In one example REL_VEL_1 may be of the same absolute value as REL_VEL_2 but have a different sign. For example, REL_VEL_1 may be +15 km/h while REL_VEL_2 is -15 km/hr. The positive velocity can mean that the object 120 and transducer 105 are moving away from each other while the negative velocity can mean that the object and transducer are moving toward each other, or vice versa. The absolute values of the relative velocities need not be the same. For example, REL_VEL_1 may be +20 km/h while REL_VEL_2 is -15 km/hr. In yet another example, the sign of both relative velocities may be the same and their magnitudes are different.

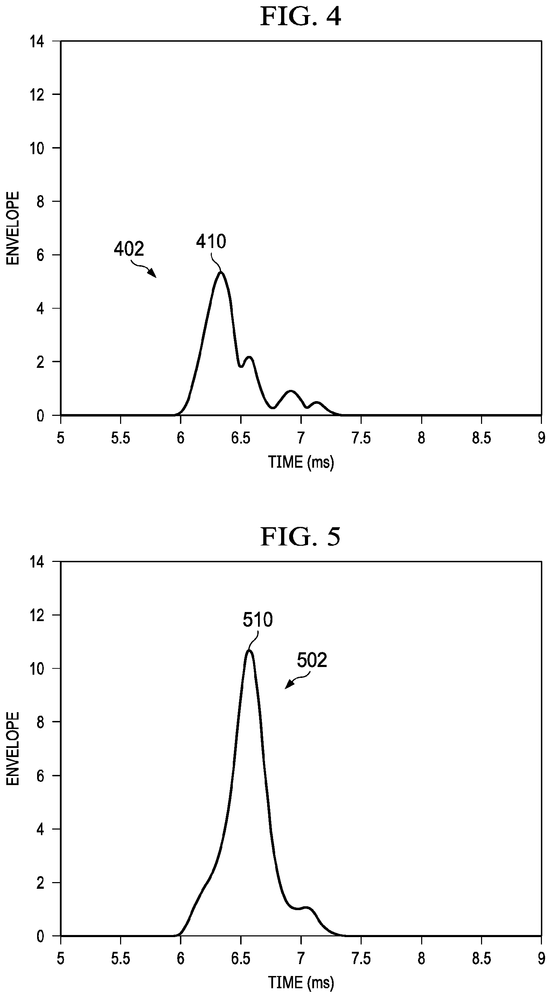

The decimation ratio for each template generated by the decimator 314 is given by: $decimation ratio = \frac{TX CLK FREQ}{CORR CLK FREQ} ∗ \frac{1}{1 - \frac{2 v}{c}}$ where v is the relative velocity to be used for a give template. FIGS. 4 and 5 provide examples of the output signals from the envelope detectors 310 and 312 when a different template is used for each of the correlators 306 and 308. The envelope waveform 402 of FIG. 4 may represent the output signal 311 from envelope detector 310 while the envelope waveform 502 of FIG. 5 may represent the output signal 313 from envelope detector 312. The template TEMPLATE_1 provided to correlator 306 was determined based on a different relative velocity (e.g., REL_VEL_1) than was used to generate the template TEMPLATE_2 provided to correlator 308 (e.g., REL_VEL_2). Each envelope waveform 402, 502 has a different peak amplitude 402 and 502, respectively, because the received signal correlated to each of the templates resulted from an example in which there was a non-zero relative velocity between object and transducer that was closer to the relative velocity used to generate one template versus the other. In the example of FIGS. 4 and 5, the peak amplitude 510 in FIG. 5 is higher than that of the peak amplitude 410 of FIG. 4. This difference indicates that the signal received by transducer 105 pertained to a non-zero relative velocity between object and transducer that was closer to the relative velocity used to generate TEMPLATE_2 for correlator 308 than for TEMPLATE_1 for correlator 306.

The location of the peak in the envelope waveforms can be determined based on whether an up-chirp or a down-chirp is implemented. In an up-chirp, the frequency of the ultrasound signal increases and in a down-chirp, the frequency decreases. For a linear up-chirp (frequency increases linearly with respect to time), the location of the peak in time relative to the start of the echo can be determined as $N \frac{1}{Ft} \left(1-\frac{Fd - Fm}{Δ f}\right)$ where *N* is the number of pulses that form each ultrasonic sound burst, *Ft* is the transducer frequency, *Fm* is the frequency shift associated with the relative velocity used to generate the corresponding template and *Δf* is the range of frequencies used to generate each ultrasonic chirp signal. *Fm* is selected to cover the desired Doppler frequency range. For example, if the Doppler frequency range is from *-Δf*/*2 to* +*Δf*/*2, Fm* can be set to coincide with *Δf*/*4, and* another *value of Fm at -Δf*/*4.* In the linear up-chirp case, when there is a positive Doppler shift Fd, the envelope peak is present at an earlier time (assuming the positive sign means the object and transducer are becoming closer together). Conversely, for a negative Doppler shift, the envelope peak will be present at a later time.

For a linear down-chirp, the location of the peak in the envelope waveforms can be determined as $N \frac{1}{{F}_{t}} \left(1+\frac{Fd - Fm}{Δ f}\right)$. In the linear down-chirp case, when there is a positive Doppler shift Fd, the envelope peak is present at a later time (assuming the positive sign means the object and transducer are becoming closer together). Conversely, for a negative Doppler shift, the envelope peak will be present at an earlier time.

One way to estimate the Doppler frequency Fd is to transmit one linear up-chirp signal, calculate a time of flight (TOF1) as $TOF 1 = TOF_object + N \frac{1}{{F}_{t}} \left(1-\frac{Fd - Fm}{Δ f}\right)$ . Then one linear down-chirp signal can be transmitted and a second time of flight (TOF2) can be calculated as $TOF 2 = TOF_object + N \frac{1}{{F}_{t}} \left(1+\frac{Fd - Fm}{Δ f}\right)$ . Subtracting TOF1 from TOF2 results in: $N \frac{2}{Ft} \frac{Fd}{Δ f} = TOF 2 - TOF 1$ Because N, Ft, and Δf are known, Fd can readily be calculated. However, this approach assumes that the object is relatively stationary during the two time of flight measurements.

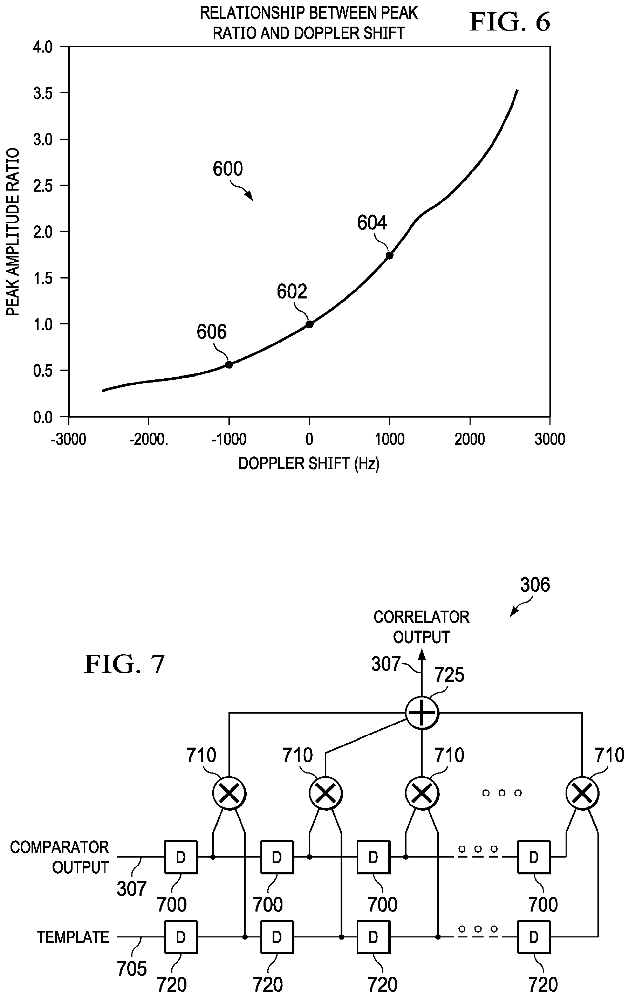

If the template is shifted by a positive frequency *Fm,* the envelope peak will appear at a later time, and if the template is shifted by a negative frequency *Fm,* the envelope peak will appear at an earlier time. By using multiple templates, each determined using a different relative velocity and thus a different Doppler shift, the ratio of the peaks of correlators' outputs can be represented as: $α = \frac{Δ f - \left|Fd-Fm1\right|}{Δ f - \left|Fd-Fm2\right|}$ where α is the ratio of the peaks, *Fm1* is the Doppler shift frequency corresponding to the relative velocity used to generate TEMPLATE_1 and *Fm2* is the Doppler shift frequency corresponding to the relative velocity used to generate TEMPLATE_2. In the equation above, *Δf, Fm1,* and *Fm2* are known, and thus the ratio of the envelope peaks is a function of the Doppler shift. FIG. 6 shows an example 600 of the relationship between the ratio of the peak amplitudes and Doppler shift. If the ratio is 1 as indicated at 602, which means the peak amplitudes are the same, the corresponding Doppler shift is 0. A ratio of, for example, 1.75 (604) corresponds to a positive Doppler shift of 1 kHz and a ratio of 0.6 corresponds to a negative Doppler shift of -1 kHz.

The curve, such as that shown in FIG. 6, can generally be divided into three sections (Fd>=Fm1, Fm1>Fd>=Fm2, and Fd<Fm2). These three sections of the curve can be used to calculate Fd as follows (assuming Fm1 = Fm and Fm2 = -Fm). ${f}_{D} = \left\{\begin{matrix}Δ f - \frac{α + 1}{α - 1} {f}_{M} & α \geq \frac{Δ f}{Δ f - 2 {f}_{M}} \\ \frac{α - 1}{α + 1} \left(Δf-{f}_{M}\right) & \frac{Δ f}{Δ f - 2 {f}_{M}} > α \geq \frac{Δ f - 2 {f}_{M}}{Δ f} \\ - Δ f - \frac{α + 1}{α - 1} {f}_{M} & α < \frac{Δ f - 2 {f}_{M}}{Δ f}\end{matrix}\right.$

The relationship between peak amplitude ratio and Doppler shift can be determined a priori and programmed into storage in the ultrasonic sensing system 200 as, for example, a look-up table.

Referring again to FIG. 3, Doppler shift determination circuit 325 receives the envelope detector output signals 311 and 313, determines the peaks from the envelope detectors' output signals, and computes the ratio of the peaks. The ratio can then be used to determine the Doppler frequency Fd using a look-up table or other structure or mechanism implemented in the Doppler shift determination circuit 325 to derive the Doppler frequency from the ratio.

The correction circuit 215 corrects the count value from the timer 204 by adding to or subtracting from the timer count value an amount of time (or value representative of the amount of time) derived from the Doppler frequency Fd. In one example, the amount of time to add or subtract is determined by the correction circuit as $Δ T = N \left(\frac{{F}_{d}}{Δ f}\right)$ for a linear up-chirp signal and $Δ T = - N \left(\frac{{F}_{d}}{Δ f}\right)$ for a linear down chirp signal.

When enabled, Doppler time of flight (TOF) compensation can be used to apply peak location compensation based on the Doppler information. In some examples, an enable signal can be configured through an internal register accessible by a serial interface. The enable signal can be used to enable Doppler TOF compensation. TOF is the estimated time of flight from peak locations.
- For a linear up chirp (i.e., frequency increase during the chirp), ToF + N*1/Ft*(Fd-Fm)/Δf
- For a linear down-chirp (i.e., frequency decrease during the chirp), ToF - N*1/Ft*(Fd-Fm)/Δf

FIG. 7 shows an example of correlator 306, although the example implementation can be used for correlator 308 as well. In this example, the correlator 306 includes a series of delay buffers 700 through which the ADC 304 output flows, and a series of corresponding delay buffers 720 through which TEMPLATE_1 flows. Each delay buffer 700, 720 may implement the same amount of time delay as the other delay buffers. The output of corresponding delay buffers 700, 720 are then multiplied together as shown by multipliers 710, and the outputs of the multipliers 710 are then summed together by an adder 725 to produce the correlator output 307. The correlator output 307 at a given instant of time is a multi-bit digital signal that indicates how closely the received sound signal 244 (e.g., output of ADC 304) matches the expected sound signal based on the transmitted sound signal 230 at that particular instant of time.

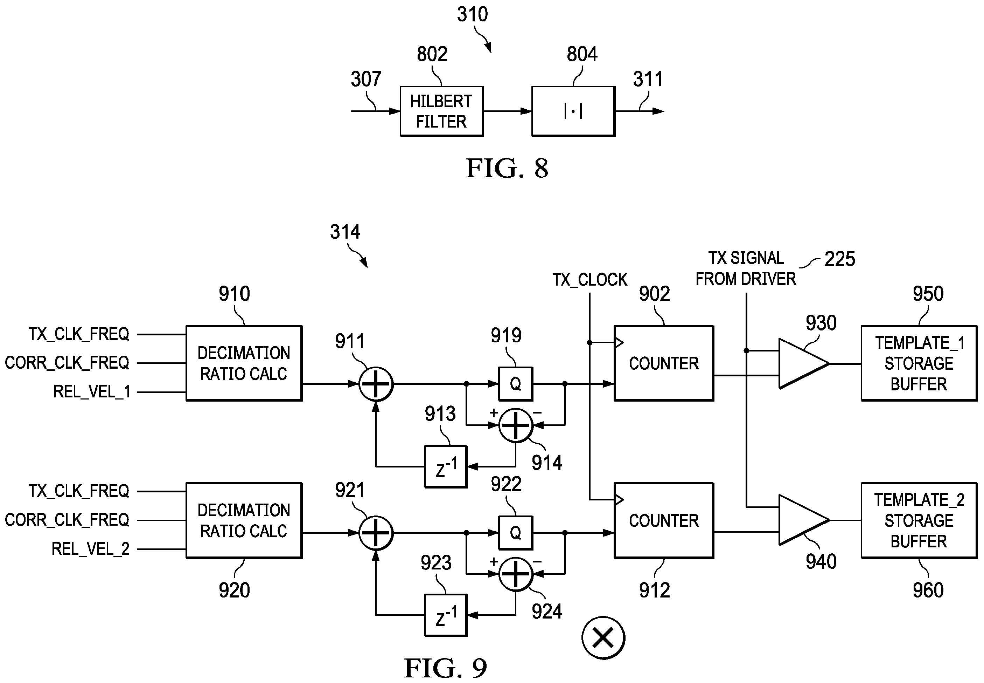

The correlator outputs 307 and 309 are provided to envelope detectors 310 and 312, respectively. Each envelope detector generates an output signal that generally tracks the envelope (e.g., the peaks) of its corresponding comparator's output. FIG. 8 shows an example implementation of envelope detector 310, although the example implementation can be used for envelope detector 312 as well. This envelope detector example includes a Hilbert filter 802 and an absolute value circuit 804. For a real input signal xr, the Hilbert filter generates a complex analytic signal, xr + j*xi, where $j = \sqrt{- 1}$, and xi is the signal xr with 90 degree phase shift. The absolute value of the complex analytic signal, |xr +j*xi|, is defined as $\sqrt{{xr}^{2} + {xi}^{2}}$, which is the envelope of the signal xr.

More than two correlators can be implemented in some examples. If there are, for example, three correlators, the ratio between the peak values of correlator 1 and 2 can be calculated to obtain one value of Fd. The ratio between the peak values of correlator 2 and 3 can be calculated to obtain another value of Fd. The final estimate of Fd is the average of the two values.

FIG. 9 shows an example of decimator 314. The example decimator of FIG. 9 includes counters 902 and 912, decimation ratio calculators 910 and 920, tristate buffers 930 and 940 and TEMPLATE_1 storage buffer 950 and TEMPLATE_2 storage buffer 960. Associated with decimation ratio calculator 910 are adders 911 and 914, a quantizer (Q) 919 (a rounding function whose output is an integer), and an inverse Z transform circuit 913 (which represents a unit sample delay for the upcoming signal and thus also referred to as a delay element). Similarly, associated with decimation ratio calculator 920 are adders 921 and 924, a Q 922, and an inverse Z transform circuit 923.

Decimation ratio calculator 910 calculates the decimation ratio for TEMPLATE_1 and decimation ratio calculator 920 calculates the decimation ratio for TEMPLATE_2. The output of each decimation ratio calculator 910, 920 is used as the counter period for each of the corresponding counters 902, 912. The output of each decimation ratio calculator 910, 820 may be used to configure an initial or terminal count value for each counter. The counters may be count-up or count-down counters. Each counter 902, 912 counts edges of the transmitter clock (TX_CLOCK) which is internal to the driver 202 and whose frequency is TX_CLK_FREQ. Each counter counts from initial count value to a terminal count value. Upon occurrence of the terminal count value, the respective counter 902, 912 asserts an output signal (e.g., a pulse) that causes the corresponding tristate buffer 930 to pass the current state of the electrical signal 225 from the driver 202 to the corresponding template storage buffer 950, 960. TEMPLATE_1 is provided by the TEMPLATE_1 storage buffer 950 and TEMPLATE_2 is provided by the TEMPLATE_2 storage buffer 960.

The decimation ratio can be an integer or a fractional number. As a fractional number, the period of the counter cannot be used. Instead, the adders 911/914, Q 919 and inverse Z transform circuit 913 are used to round the decimation ratio to an integer value while keeping the error signal through the delay loop and adding the error signal to the next counter value. For example, if decimation ratio is 40.5, the desired counter periods would be 41, 40, 41, 40, 41, 40, etc.

In this description, the term "couple" or "couples" means either an indirect or direct wired or wireless connection. Thus, if a first device couples to a second device, that connection may be through a direct connection or through an indirect connection via other devices and connections. Also, in this description, the recitation "based on" means "based at least in part on." Therefore, if X is based on Y, then X may be a function of Y and any number of other factors.

Modifications are possible in the described embodiments, and other embodiments are possible, within the scope of the claims.

## Claims

1. An ultrasonic sensing system (210), comprising:
a decimator (314) adapted to be coupled to an ultrasonic transducer (105), the decimator (314) being configured to generate first and second template signals (TEMPLATE_1, TEMPLATE_2) by decimating a transmit signal for transmission through the ultrasonic transducer (105), the first template signal (TEMPLATE_1) being generated by the decimator (314) using a first decimation ratio, and the second template signal (TEMPLATE_2) being generated by the decimator (314) using a second decimation ratio that is different from the first decimation ratio;
a first correlator (306) coupled to the decimator (314), the first correlator (306) configured to generate a first output signal (307) by correlating the first template signal (TEMPLATE_1) with a received signal derived from the ultrasonic transducer (105);
a second correlator (308) coupled to the decimator (314), the second correlator (308) configured to generate a second output signal (309) by correlating the signal derived from the ultrasonic transducer (105) with the second template signal (TEMPLATE_2);
a Doppler shift determination circuit (325) configured to determine a Doppler frequency shift based on the first and second output signals (307, 309); and
a first envelope detector (310) coupled to the first correlator (306), the first envelope detector (310) is configured to generate an output signal (311) representative of an envelope of the output signal (307) from the first correlator (306); and
a second envelope detector (312) coupled to the second correlator (308), the second envelope detector (312) is configured to generate an output signal (313) representative of an envelope of the output signal (309) from the second correlator (308),
**characterized in that** the Doppler shift determination circuit (325) is configured to determine the Doppler frequency shift based on the ratio of peaks of the output signals (311, 313) of the first and second envelope detectors (310, 312), and the ultrasonic sensing system (210) further includes a timer (204) configured for determining the time elapsed between when the transmit signal was emitted by the ultrasonic transducer (105) and when a received signal was received by the ultrasonic transducer (105), and a correction circuit (215) configured to correct an output of the timer (204) based on the ratio.

2. The ultrasonic sensing system of claim 1, wherein the decimator (314) is configured to decimate the transmit signal based on a frequency of the transmit signal, a clock frequency for the first and second correlators (306, 308), a first relative velocity between the ultrasonic transducer (105) and object (120), and a second relative velocity between the ultrasonic transducer (105) and object (120).

3. The ultrasonic sensing system of claim 2, wherein the first relative velocity is a positive value and the second relative velocity is a negative value.

4. A method, comprising:
decimating a transmit signal to be transmitted through an ultrasonic transducer (105) using a first decimation ratio to generate a first template signal (TEMPLATE_1);
decimating the transmit signal using a second decimation ratio, different from the first decimation ratio, to generate a second template signal (TEMPLATE _2);
correlating a signal derived from the ultrasonic transducer (105) with the first template signal (TEMPLATE_1) to generate a first correlated output (307);
correlating the signal derived from the ultrasonic transducer (105) with the second template signal (TEMPLATE_2) to generate a second correlated output (309); and
determining a Doppler frequency shift based on the first and second correlated outputs (307, 309);
generating an output signal (311) representative of an envelope of the first correlated output (307);
generating a further output signal (313) representative of an envelope of the second correlated output (309), **characterized in that**
determining the Doppler frequency shift based on the ratio of peaks of the output signal (311) and the further output signal (313),
determining the time elapsed between when the transmit signal was emitted by the ultrasonic transducer (105) and when a received signal was received by the ultrasonic transducer (105); and correcting an output of a timer (204) based on the ratio.

5. The method of claim 4, further comprising calculating the first decimation ratio based on at least one of a frequency of the transmit signal, a clock frequency for the first and second correlators (306, 308), a first relative velocity between the ultrasonic transducer (105) and object (120), or a second relative velocity between the ultrasonic transducer (105) and object (120).

6. The method of claim 4, further comprising calculating the first decimation ratio based on a frequency of the transmit signal, a clock frequency for the first and second correlators (306, 308), a first relative velocity between the ultrasonic transducer (105) and object (120), and a second relative velocity between the ultrasonic transducer (105) and object (120).

7. The method of claim 6, wherein the first relative velocity is a positive value, and the second relative velocity is a negative value.

## Patentansprüche

1. Ultraschallerfassungssystem (210), umfassend:
einen Dezimierer (314), der dazu ausgestaltet ist, mit einem Ultraschallwandler (105) gekoppelt zu werden, wobei der Dezimierer (314) dazu ausgelegt ist, ein erstes und ein zweites Template-Signale (TEMPLATE_1, TEMPLATE_2) durch Dezimieren eines Übertragungssignals zur Übertragung über den Ultraschallwandler (105) zu erzeugen, wobei das erste Template-Signal (TEMPLATE_1) von dem Dezimierer (314) unter Verwendung eines ersten Dezimierverhältnisses erzeugt wird und das zweite Template-Signal (TEMPLATE_2) von dem Dezimierer (314) unter Verwendung eines zweiten Dezimierverhältnisses erzeugt wird, das von dem ersten Dezimierverhältnis verschieden ist;
einen ersten Korrelator (306), der mit dem Dezimierer (314) gekoppelt ist, wobei der erste Korrelator (306) dazu ausgelegt ist, ein erstes Ausgabesignal (307) durch Korrelieren des ersten Template-Signals (TEMPLATE_1) mit einem empfangenen Signal, das von dem Ultraschallwandler (105) abgeleitet ist, zu erzeugen;
einen zweiten Korrelator (308), der mit dem Dezimierer (314) gekoppelt ist, wobei der zweite Korrelator (308) dazu ausgelegt ist, ein zweites Ausgabesignal (309) durch Korrelieren des Signals, das von dem Ultraschallwandler (105) abgeleitet ist, mit dem zweiten Template-Signal (TEMPLATE_2) zu erzeugen;
eine Dopplerverschiebungsbestimmungsschaltung (325), die dazu ausgelegt ist, eine Dopplerfrequenzverschiebung basierend auf dem ersten und dem zweiten Ausgabesignal (307, 309) zu bestimmen; und
einen ersten Hüllkurvendetektor (310), der mit dem ersten Korrelator (306) gekoppelt ist, wobei der erste Hüllkurvendetektor (310) dazu ausgelegt ist, ein Ausgabesignal (311) zu erzeugen, das eine Hüllkurve des Ausgabesignals (307) von dem ersten Korrelator (306) repräsentiert; und
einen zweiten Hüllkurvendetektor (312), der mit dem zweiten Korrelator (308) gekoppelt ist, wobei der zweite Hüllkurvendetektor (312) dazu ausgelegt ist, ein Ausgabesignal (313) zu erzeugen, das eine Hüllkurve des Ausgabesignals (309) von dem zweiten Korrelator (308) repräsentiert,
**dadurch gekennzeichnet, dass** die Dopplerverschiebungsbestimmungsschaltung (325) dazu ausgelegt ist, die Dopplerfrequenzverschiebung basierend auf dem Verhältnis von Spitzen der Ausgabesignale (311, 313) des ersten und des zweiten Hüllkurvendetektors (310, 312) zu bestimmen, und das Ultraschallerfassungssystem (210) ferner einen Timer (204), der dazu ausgelegt ist, die Zeit zu bestimmen, die zwischen dem Abgeben des Übertragungssignals durch den Ultraschallwandler (105) und dem Empfangen eines empfangenen Signals durch den Ultraschallwandler (105) verstrichen ist, und eine Korrekturschaltung (215) umfasst, die dazu ausgelegt ist, eine Ausgabe des Timers (204) basierend auf dem Verhältnis zu korrigieren.

2. Ultraschallerfassungssystem nach Anspruch 1, wobei der Dezimierer (314) dazu ausgelegt ist, das Übertragungssignal basierend auf einer Frequenz des Übertragungssignals, einer Taktfrequenz für den ersten und den zweiten Korrelator (306, 308), einer ersten relativen Geschwindigkeit zwischen dem Ultraschallwandler (105) und dem Objekt (120) und einer zweiten relativen Geschwindigkeit zwischen dem Ultraschallwandler (105) und dem Objekt (120) zu dezimieren.

3. Ultraschallerfassungssystem nach Anspruch 2, wobei die erste relative Geschwindigkeit ein positiver Wert ist und die zweite relative Geschwindigkeit ein negativer Wert ist.

4. Verfahren, umfassend:
Dezimieren eines Übertragungssignals, das über einen Ultraschallwandler (105) übertragen werden soll, unter Verwendung eines ersten Dezimierverhältnisses, um ein erstes Template-Signal (TEMPLATE_1) zu erzeugen;
Dezimieren des Übertragungssignals unter Verwendung eines zweiten Dezimierverhältnisses, das sich von dem ersten Dezimierverhältnis unterscheidet, um ein zweites Template-Signal (TEMPLATE_2) zu erzeugen;
Korrelieren eines Signals, das von dem Ultraschallwandler (105) abgeleitet ist, mit dem ersten Template-Signal (TEMPLATE_1), um eine erste korrelierte Ausgabe (307) zu erzeugen;
Korrelieren des Signals, das von dem Ultraschallwandler (105) abgeleitet ist, mit dem zweiten Template-Signal (TEMPLATE_2), um eine zweite korrelierte Ausgabe (309) zu erzeugen; und
Bestimmen einer Dopplerfrequenzverschiebung basierend auf der ersten und der zweiten korrelierten Ausgabe (307, 309);
Erzeugen eines Ausgabesignals (311), das eine Hüllkurve der ersten korrelierten Ausgabe (307) repräsentiert;
Erzeugen eines weiteren Ausgabesignals (313), das eine Hüllkurve der zweiten korrelierten Ausgabe (309) repräsentiert,
**gekennzeichnet durch**
das Bestimmen der Dopplerfrequenzverschiebung basierend auf dem Verhältnis von Spitzen des Ausgabesignals (311) und des weiteren Ausgabesignals (313),
Bestimmen der Zeit, die zwischen dem Abgeben des Übertragungssignals durch den Ultraschallwandler (105) und dem Empfangen eines empfangenen Signals durch den Ultraschallwandler (105) verstrichen ist; und Korrigieren einer Ausgabe eines Timers (204) basierend auf dem Verhältnis.

5. Verfahren nach Anspruch 4, ferner umfassend das Berechnen des ersten Dezimierverhältnisses basierend auf mindestens einem von einer Frequenz des Übertragungssignals, einer Taktfrequenz für den ersten und den zweiten Korrelator (306, 308), einer ersten relativen Geschwindigkeit zwischen dem Ultraschallwandler (105) und dem Objekt (120) oder einer zweiten relativen Geschwindigkeit zwischen dem Ultraschallwandler (105) und dem Objekt (120).

6. Verfahren nach Anspruch 4, ferner umfassend das Berechnen des ersten Dezimierverhältnisses basierend auf einer Frequenz des Übertragungssignals, einer Taktfrequenz für den ersten und den zweiten Korrelator (306, 308), einer ersten relativen Geschwindigkeit zwischen dem Ultraschallwandler (105) und dem Objekt (120) und einer zweiten relativen Geschwindigkeit zwischen dem Ultraschallwandler (105) und dem Objekt (120).

7. Verfahren nach Anspruch 6, wobei die erste relative Geschwindigkeit ein positiver Wert ist und die zweite relative Geschwindigkeit ein negativer Wert ist.

## Revendications

1. Système de détection ultrasonore (210), comprenant :
un décimateur (314) adapté pour être couplé à un transducteur ultrasonore (105), le décimateur (314) étant conçu pour générer de premier et deuxième signaux modèles (TEMPLATE_1, TEMPLATE_2) en décimant un signal d'émission pour émission par le transducteur ultrasonore (105), le premier signal modèle (TEMPLATE_1) étant généré par le décimateur (314) au moyen d'un premier rapport de décimation, et le deuxième signal modèle (TEMPLATE_2) étant généré par le décimateur (314) au moyen d'un deuxième rapport de décimation qui est différent du premier rapport de décimation ;
un premier corrélateur (306) couplé au décimateur (314), le premier corrélateur (306) étant conçu pour générer un premier signal de sortie (307) en corrélant le premier signal modèle (TEMPLATE_1) avec un signal reçu provenant du transducteur ultrasonore (105) ;
un deuxième corrélateur (308) couplé au décimateur (314), le deuxième corrélateur (308) étant conçu pour générer un deuxième signal de sortie (309) en corrélant le signal provenant du transducteur ultrasonore (105) avec le deuxième signal modèle (TEMPLATE_2) ;
un circuit de détermination de décalage Doppler (325) conçu pour déterminer un décalage de fréquence Doppler en se basant sur les premier et deuxième signaux de sortie (307, 309) ; et
un premier détecteur d'enveloppe (310) couplé au premier corrélateur (306), le premier détecteur d'enveloppe (310) étant conçu pour générer un signal de sortie (311) représentatif d'une enveloppe du signal de sortie (307) issu du premier corrélateur (306) ; et
un deuxième détecteur d'enveloppe (312) couplé au deuxième corrélateur (308), le deuxième détecteur d'enveloppe (312) étant conçu pour générer un signal de sortie (313) représentatif d'une enveloppe du signal de sortie (309) issu du deuxième corrélateur (308),
**caractérisé en ce que** le circuit de détermination de décalage Doppler (325) est conçu pour déterminer le décalage de fréquence Doppler en se basant sur le rapport de pics des signaux de sortie (311, 313) des premier et deuxième détecteurs d'enveloppe (310, 312), et le système de détection ultrasonore (210) comporte en outre un chronomètre (204) conçu pour déterminer le temps écoulé entre le moment où le signal d'émission a été émis par le transducteur ultrasonore (105) et le moment où un signal reçu a été reçu par le transducteur ultrasonore (105), et un circuit de correction (215) conçu pour corriger une sortie du chronomètre (204) en se basant sur le rapport.

2. Système de détection ultrasonore de la revendication 1, dans lequel le décimateur (314) est conçu pour décimer le signal d'émission en se basant sur une fréquence du signal d'émission, une fréquence d'horloge pour les premier et deuxième corrélateurs (306, 308), une première vitesse relative entre le transducteur ultrasonore (105) et un objet (120), et une deuxième vitesse relative entre le transducteur ultrasonore (105) et l'objet (120).

3. Système de détection ultrasonore de la revendication 2, dans lequel la première vitesse relative est une valeur positive et la deuxième vitesse relative est une valeur négative.

4. Procédé, comprenant :
la décimation d'un signal d'émission devant être émis par un transducteur ultrasonore (105) au moyen d'un premier rapport de décimation pour générer un premier signal modèle (TEMPLATE_1) ;
la décimation du signal d'émission au moyen d'un deuxième rapport de décimation, différent du premier rapport de décimation, pour générer un deuxième signal modèle (TEMPLATE_2) ;
la corrélation d'un signal provenant du transducteur ultrasonore (105) avec le premier signal modèle (TEMPLATE_1) pour générer une première sortie corrélée (307) ;
la corrélation du signal provenant du transducteur ultrasonore (105) avec le deuxième signal modèle (TEMPLATE_2) pour générer une deuxième sortie corrélée (309) ; et
la détermination d'un décalage de fréquence Doppler sur la base des première et deuxième sorties corrélées (307, 309) ;
la génération d'un signal de sortie (311) représentatif d'une enveloppe de la première sortie corrélée (307) ;
la génération d'un autre signal de sortie (313) représentatif d'une enveloppe de la deuxième sortie corrélée (309),
**caractérisé par**
la détermination du décalage de fréquence Doppler sur la base du rapport de pics du signal de sortie (311) et de l'autre signal de sortie (313),
la détermination du temps écoulé entre le moment où le signal d'émission a été émis par le transducteur ultrasonore (105) et le moment où un signal reçu a été reçu par le transducteur ultrasonore (105) ; et la correction d'une sortie d'un chronomètre (204) sur la base du rapport.

5. Procédé de la revendication 4, comprenant en outre le calcul du premier rapport de décimation sur la base d'au moins un paramètre parmi une fréquence du signal d'émission, une fréquence d'horloge pour les premier et deuxième corrélateurs (306, 308), une première vitesse relative entre le transducteur ultrasonore (105) et un objet (120), et une deuxième vitesse relative entre le transducteur ultrasonore (105) et l'objet (120).

6. Procédé de la revendication 4, comprenant en outre le calcul du premier rapport de décimation sur la base d'une fréquence du signal d'émission, d'une fréquence d'horloge pour les premier et deuxième corrélateurs (306, 308), d'une première vitesse relative entre le transducteur ultrasonore (105) et un objet (120), et d'une deuxième vitesse relative entre le transducteur ultrasonore (105) et l'objet (120).

7. Procédé de la revendication 6, dans lequel la première vitesse relative est une valeur positive, et la deuxième vitesse relative est une valeur négative.
